# FASCICULE DE BREVET EUROPEEN

(11) **EP 1 232 122 B1**
(45) Date de publication et mention de la délivrance du brevet: **31.05.2006**
(21) Numéro de dépôt: 00971491.6
(22) Date de dépôt: 24.10.2000
(51) Int. Cl.: C02F 1/78, C02F 1/72, B01J 8/22, B01J 8/00

(54) **PROCEDE ET DISPOSITIF D'EPURATION D'EFFLUENTS AQUEUX PAR OXYDATION CATALYTIQUE**
VERFAHREN UND VORRICHTUNG ZUR REINIGUNG VON WÄSSRIGEN ABFÄLLEN DURCH KATALYTISCHE OXIDATION
METHOD AND DEVICE FOR PURIFYING AQUEOUS EFFLUENTS BY CATALYTIC OXIDATION

(30) Priorité: 26.11.1999 FR 9914937
(43) Date de publication de la demande: 21.08.2002
(73) Titulaire: ONDEO DEGREMONT, 92500 Rueil-Malmaison (FR)
(72) Inventeur: BAIG, Sylvie, F-78360 Montesson (FR); CORDIER, Michel, F-92000 Nanterre (FR); TRUC, Alain, F-92300 Levallois-Perret (FR)
(74) Mandataire: Peaucelle, Chantal
(86) Numéro de dépôt international: PCT/FR2000/002955
(87) Numéro de publication internationale: WO 2001/038235

(56) Documents cités:
- EP-A- 0 010 571
- DE-C- 4 446 375
- FR-A- 2 291 687

## Description

La présente invention a pour objet un procédé et un dispositif d'épuration d'effluents aqueux, par oxydation catalytique, mettant en oeuvre un réacteur triphasique traversé en continu par les effluents à traiter qui sont maintenus au contact d'un catalyseur et soumis à une réaction chimique d'oxydation.

On sait que les réacteurs continus triphasiques à catalyseur hétérogène, utilisés industriellement, sont des réacteurs à lit fixe, avec écoulement biphasique, ou des réacteurs à lit fluidisés, à trois phases.

Le type de réacteur catalytique le plus répandu est celui où les phases fluides traversent un lit fixe constitué par un empilement de particules de catalyseur. Trois configurations sont envisageables suivant les sens d'écoulement respectifs des phases gazeuse et liquide :
- Co-courant descendant,
- Co-courant ascendant,
- Contre-courant.

Les réacteurs catalytiques à lit fixe à écoulement co-courant descendant sont les plus répandus à l'échelle industrielle. Ils assurent le maintien du lit catalytique immobile et, de ce fait, ils sont préférés aux systèmes co-courant ascendant pour lesquels le mouvement des particules de catalyseur, sous l'effet de l'écoulement, conduit à une attrition inacceptable. En revanche, les réacteurs à lit fixe et écoulement co-courant descendant présentent des défauts de distribution du liquide qui sont résolus dans le cas des systèmes d'écoulement ascendant.

Les réacteurs triphasiques à écoulement à contre-courant sont difficiles à mettre en oeuvre industriellement, à cause du phénomène d'engorgement qui limite sévèrement les débits de chacune des phases devant parcourir le lit catalytique. Dans ce cas, la solution consiste à utiliser des particules de catalyseur de dimensions plus importantes que celles admises dans les lits fixes, ce qui a malheureusement pour conséquence une moindre efficacité dudit catalyseur.

Les réacteurs triphasiques à lit fluidisé ou bouillonnant permettent d'améliorer les transferts fluide-solide catalytique en utilisant un matériau de granulométrie très fine. Dans ce cas, les phases liquide et gazeuse traversent le réacteur de bas en haut et se conjuguent pour maintenir en suspension les particules solides de taille généralement comprise entre 0,1 et 5 mm, Par rapport à un lit fixe, le lit fluidisé présente deux avantages : un meilleur contrôle de la température et la possibilité d'extraire le catalyseur en cours de fonctionnement pour le remplacer. En revanche, une difficulté majeure apparaît dans le rapport des débits de gaz et de liquide admissibles. En effet, la fluidisation est facilement réalisée dans le cas où la vitesse du liquide est relativement élevée alors que la vitesse du gaz reste faible. Dans le cas inverse, un régime de type pulsé avec alternance de zones concentrées et diluées s'établit. Un recyclage partiel de la phase liquide, réalisé au moyen d'une pompe immergée ou extérieure permet de résoudre ce problème, mais au détriment de l'efficacité du réacteur. De plus, une hauteur suffisante doit être ménagée dans la partie haute du réacteur, au-dessus du niveau supérieur du lit de catalyseur, afin d'éviter l'entraînement des particules.

Les deux types de réacteurs triphasiques rappelés ci-dessus ont déjà été mis en oeuvre, comme décrit ci-dessus dans le domaine du traitement des eaux par oxydation en présence de catalyseur hétérogène.

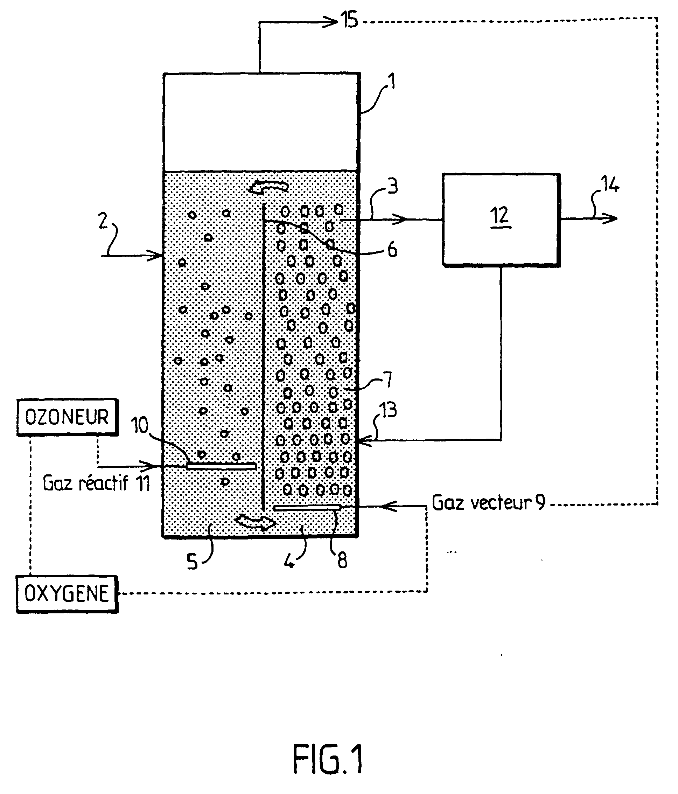

DE-44 46 375 montre, sur la figure 3, un réacteur triphasique qui comprend deux compartiments, à savoir un compartiment central dans lequel l'écoulement s'effectue vers le haut, tandis que dans l'autre compartiment l'écoulement s'effectue vers le bas. L'eau polluée, le réactif oxydant, notamment le peroxyde d'hydrogène, et le catalyseur sont introduits au sommet du deuxième compartiment de manière à circuler vers le bas. La suspension homogène de catalyseur et la circulation du mélange sont assurées par une introduction d'air en partie basse du compartiment central. La paroi verticale cylindrique du compartiment central comporte des ouvertures à sa partie inférieure afin de permettre le passage de l'effluent en provenance du deuxième compartiment, annulaire, qui entoure le compartiment central. L'injection de l'oxydant s'effectue à co-courant descendant du flux de catalyseur.

WO 90/14312 et FR-A-2291687 concernent des procédés d'ozonation avec des catalyseurs solides disposés en garnissage de colonne et alimentés en co-courant ascendant par le liquide à traiter et le gaz ozoné.

Dans FR-A-2 269 167, le catalyseur d'ozonation granulaire est inséré entre des couches fixes de matériau inerte pour remplir un réacteur à quatre chambres en série fonctionnant en système co-courant ascendant.

WO 96/21623 et WO 97/14657 proposent de réaliser l'ozonation catalytique d'eaux résiduaires en colonne à lit fixe avec dissolution préalable de l'ozone en phase liquide dans un contacteur en amont, c'est-à-dire dans un réacteur biphasique.

US-A-4,007,118 décrit une installation de traitement d'effluents par ozonation en contacteur à bulles fonctionnant en contre-courant avec écoulements du liquide vers le bas et du gaz vers le haut, au travers d'un catalyseur contenu dans des sacs immergés, ou déposés sur un support fixe, ou encore dispersé dans le milieu réactionnel et recyclé après séparation de l'eau traitée.

EP-A-0625482 met en oeuvre un traitement d'eaux polluées par oxydation en présence d'ozone, dans une colonne de traitement en système co-courant ascendant, avec lit catalytique fluidisé ou fixe.

La conception des réacteurs triphasiques à lit catalytique fixe ou fluidisé, pour le traitement d'oxydation d'eaux polluées doit non seulement prendre en compte les contraintes liées aux propriétés du catalyseur (activité, sélectivité et régénérabilité), mais aussi les variations de débit, de charge de pollution, de concentrations en matières en suspension.

Ces réacteurs triphasiques présentent un certain nombre d'inconvénients que l'on mentionnera ci-après.

### Réacteurs à lit fixe :

Bien que le réacteur à lit fixe et écoulement biphasique présente les avantages d'une mise en oeuvre simple, d'une séparation facile des phases, d'un écoulement « piston » des phases, les problèmes d'extrapolation s'avèrent complexes. En particulier, la répartition homogène de la phase liquide doit être atteinte rapidement pour éviter d'avoir une hauteur morte de lit catalytique avec désactivation rapide d'une partie du catalyseur par accumulation de particules solides ou de « poisons ».

Le maintien d'une bonne distribution des phases, critique dans les réacteurs à co-courant descendant, implique des conditions opératoires de régime caractérisées par une forte interaction des phases gazeuse et liquide et, donc, l'utilisation d'un rapport des débits gaz/liquide supérieur à 10, très élevé pour une application en traitement d'eau.

Le fonctionnement du réacteur à co-courant ascendant de gaz et de liquide est nettement préférable ; cependant, dans ce cas, il apparaît des phénomènes inévitables de rétromélange de la phase réactionnelle et de distribution imparfaite du gaz. En effet, le gaz est véhiculé dans le lit catalytique sous forme d'un train de bulles de 3 mm de diamètre environ, dont la vitesse ascensionnelle varie entre 10 et 20 cm/s. Par ailleurs, les réacteurs triphasiques à lit fixe et écoulement biphasique ascendant se caractérisent par un transfert gaz-liquide limité, résultant de la faible valeur de l'aire interfaciale (la surface de contact gaz/liquide est réduite dans le cas de bulles de diamètre important), qui régit la dissolution du gaz oxydant dans le liquide et, par voie de conséquence, la vitesse d'oxydation. Enfin, et de façon générale, il est connu que le problème majeur rencontré dans la mise en oeuvre de réacteurs triphasiques à lit fixe est une notable diminution de l'activité du catalyseur, résultant de la dégradation des phénomènes de transfert de matière intra- et extra-granulaires, liée à la taille des particules de catalyseur. Dans les deux cas d'écoulement à co-courant, le transfert de matière doit être optimisé en établissant une forte interaction entre les phases gazeuse et liquide. Ceci implique l'utilisation d'un fort débit gazeux par rapport au débit liquide à traiter et donc un large excès de gaz oxydant par rapport au polluant d'où, par voie de conséquence, un rendement d'oxydation faible.

Un autre inconvénient majeur des réacteurs à lit catalytique fixe, pour l'application en traitement d'eaux, réside dans la rétention des matières en suspension contenues dans l'eau à traiter. Suivant le sens d'écoulement de la phase liquide, les matières en suspension sont retenues dans la partie basse ou dans la partie haute du lit catalytique, et il est alors nécessaire de les évacuer périodiquement en provoquant l'expansion du lit, par exemple au moyen d'un fort débit gazeux. Ce traitement de lavage implique obligatoirement l'arrêt du fonctionnement du réacteur, d'une part, et soumet de plus, le catalyseur à des contraintes qui peuvent être incompatibles avec sa résistance mécanique.

### Réacteurs à lit fluidisé :

La mise en oeuvre de la réaction d'oxydation catalytique en réacteur à lit fluidisé permet, en utilisant des particules de granulométrie inférieure à celle mise en oeuvre dans les réacteurs à lit fixe (jusqu'à 0,1 mm), d'assurer un meilleur transfert gaz-liquide solide. Un autre intérêt du lit fluidisé réside dans la possibilité de régénérer en continu le catalyseur en cas de désactivation rapide. De façon pratique, pour l'oxydation catalytique appliquée au traitement d'eaux, on injecte les deux phases fluides réactionnelles, mélangées ou non, à la base du lit contenu dans la colonne de traitement. Selon ce schéma, pourtant classique, la technologie du lit fluidisé entraîne de nombreux inconvénients.

Le comportement du réacteur triphasique fluidisé correspond à celui d'un réacteur agité, ce qui implique une augmentation du volume réactionnel (par rapport à un réacteur triphasique à lit de catalyseur fixe) pour respecter le temps de contact nécessaire à la réaction catalytique, cette augmentation de volume entraînant l'apparition de phénomènes de rétromélange défavorables.

Enfin, la mise en suspension des particules de catalyseur nécessite, au-dessus de la zone réactionnelle, une zone de « désengagement » ou de séparation importante, pour réduire l'entraînement inévitable des particules de catalyseur dans l'eau traitée. Outre ces considérations, l'exploitation de ce type de réacteur requiert également un ajustement précis des vitesses de gaz et de liquide pour entretenir la fluidisation et éviter l'apparition de régimes intermédiaires préjudiciables aux performances du traitement. L'équilibre hydrodynamique correspond à des débits de gaz et de liquide précis, impliquant une exploitation lourde, et n'admet que de faibles variations difficilement compatibles avec le fonctionnement en continu dans le cadre du traitement d'eaux résiduaires, de composition éminemment variable.

Compte-tenu des problèmes rappelés ci-dessus, posés par la mise en oeuvre des réacteurs triphasiques selon la technique antérieure, l'objectif de l'invention est de proposer un réacteur triphasique optimisé pour la mise en oeuvre d'un procédé d'oxydation catalytique pour l'épuration d'eaux, procédé dans lequel la quantité de réactif oxydant gazeux, pour traiter une quantité d'eau donnée, est déterminée par les besoins de la réaction, et non par des considérations hydrauliques, comme c'est le cas dans l'état antérieur de l'art.

Un autre objectif de l'invention est de fournir un système d'épuration par oxydation catalytique, d'exploitation aisée et s'adaptant aux variations importantes de qualité d'eau à traiter en matière de débit, charge à oxyder, teneur en matières en suspension, et dans lequel le catalyseur est recyclé en continu.

L'invention concerne en premier lieu un procédé d'épuration d'effluents aqueux, notamment d'eaux polluées, par oxydation catalytique mettant en oeuvre un réacteur triphasique comportant deux compartiments communicants, consiste à:
- maintenir en suspension le catalyseur et le faire circuler en continu entre les deux compartiments dudit réacteur, par entraînement sous l'effet d'un gaz vecteur injecté dans l'un desdits compartiments, ou compartiment d'entraînement, en réalisant un écoulement ascendant et à co-courant de la phase gazeuse et de la phase liquide dans ledit compartiment,
caractérisé en ce que l'oxydation des polluants en contact avec le catalyseur est effectuée dans l'autre compartiment ou compartiment de réaction, par injection d'un gaz oxydant réactif dans le compartiment de réaction (5), le gaz réactif étant introduit au niveau du tiers inférieur du compartiment de réaction (5), la catalyseur en suspension circulant dans ledit compartiment (5) en écoulement descendant de la phase aqueuse, le débit gazeux étant tel qu'il assure la transfert du gaz réactif oxydant dans la phase liquide, avec écoulement d'abord en co-courant par entraînement des fines bulles, puis à contre courant au fur et à mesure que les bulles coalescent et grossissent, sans toutefois qu'il se produise une inversion du sens de la circulation descendante de la suspension liquide-solide.

Ainsi, selon le procédé objet de l'invention, on dissocie la fonction « circulation du fluide à traiter » de la fonction « réaction chimique d'oxydation », le catalyseur étant maintenu en suspension et circulant de façon ininterrompue entre les deux compartiments du réacteur, par entraînement sous l'effet de l'admission du gaz vecteur dans l'un des compartiments, la réaction chimique d'oxydation étant effectuée dans l'autre compartiment comportant l'injection d'un gaz oxydant réactif.

Selon la présente invention, ce gaz oxydant peut être de l'oxygène ou de préférence de l'ozone mélangé à de l'air ou à de l'oxygène, selon une concentration de l'ordre de 1 à 16% en masse par exemple. Le gaz vecteur peut être tout gaz disponible sur le site, de préférence de l'air ou de l'oxygène.

Selon la présente invention, on choisit le catalyseur parmi les catalyseurs d'oxydation connus selon la nature du gaz réactif et des composés à oxyder contenus dans l'effluent à traiter. Ces catalyseurs peuvent être en particulier des composés d'oxydes métalliques (métaux de transition) éventuellement déposés sur un support minéral (alumine, silice, charbon actif, dioxyde de titane, zircone, etc., purs ou en mélange). Ce catalyseur peut présenter une granulométrie comprise entre 20 microns et un millimètre, de préférence entre 100 et 300 microns.

L'invention vise également une installation d'épuration d'effluents aqueux, notamment d'eaux polluées par oxydation catalytique mettant en oeuvre le procédé défini ci-dessus qui comprend :
- un réacteur triphasique muni d'une arrivée de l'effluent à traiter, immergée dans le volume réactionnel et d'une sortie de l'effluent traité, ledit réacteur étant séparé en deux compartiments, (un compartiment d'entraînement et un compartiment de réaction) par une paroi verticale laissant un passage à l'effluent, respectivement à ses extrémités supérieure et inférieure, les deux compartiments communiquant ainsi en partie haute et basse dudit réacteur, ce dernier étant rempli du catalyseur ;
- des moyens d'injection et de diffusion de bulles d'un gaz vecteur positionnés dans le compartiment d'entraînement, au niveau de l'éxtrémité inférieure de ladite paroi de séparation, ledit gaz vecteur assurant le maintien en suspension du catalyseur et sa circulation continue entre les deux compartiments,
et est caractérisée en ce qu'elle comporte des moyens d'injection et de diffusion d'un gaz oxydant réactif, sous la forme de fines bulles, afin d'assurer l'oxydation des polluants en contact avec le catalyseur, ces moyens étant positionnés dans le compartiment de réaction (5) et le gaz étant introduit au niveau du tiers inférieur du compartiment de réaction (5), le débit gazeux étant tel qu'il assure le transfert du gaz réactif oxydant dans la phase liquide,avec écoulement d'abord en co-courant par entraînement des fines bulles, puis à contre courant au fur et à mesure que les bulles coalescent et grossissent, sans toutefois qu'il se produise une inversion du sens de la circulation descendante de la suspension liquide-solide.

D'autres caractéristiques et avantages de la présente invention ressortiront de la description faite ci-après en référence aux dessins annexés dont la figure unique est une représentation schématique, en coupe par un plan vertical, d'une installation selon l'invention.
En se référant à la figure unique, on voit que, dans cet exemple de réalisation dépourvu de tout caractère limitatif, l'installation d'épuration d'effluents aqueux par oxydation catalytique comprend un réacteur désigné dans son ensemble par la référence 1 qui est pourvu d'une arrivée 2 de l'effluent, immergée dans le volume réactionnel, et d'une sortie 3 de l'effluent traité, après traitement d'oxydation dans le réacteur. Ledit réacteur est divisé en deux compartiments 4 et 5, séparés par une paroi verticale 6 laissant un passage à l'effluent, respectivement à ses extrémités supérieure et inférieure, les deux compartiments communiquant ainsi en partie haute et basse dudit réacteur.

Le réacteur 1 est partiellement rempli du catalyseur 7 qui est initialement introduit sous la forme d'une suspension. Le compartiment 4 est muni de moyens 8 d'injection et de diffusion de bulles du gaz vecteur 9, ce dernier étant introduit au niveau de l'extrémité inférieure de la paroi 6. Le gaz vecteur 9 peut être introduit par tout moyen connu assurant la diffusion d'un gaz sous la forme de bulles de quelques millimètres de diamètre. Ce moyen de diffusion du gaz vecteur et son dispositif d'injection, l'espace compris entre l'extrémité basse de la paroi de séparation 6 et l'arrivée 2 de l'effluent sont conçus de façon à obtenir un écoulement ascendant, à co-courant, de la phase gazeuse et de la phase liquide dans le compartiment 4. Sous l'effet de l'écoulement des deux phases fluides, le catalyseur est mis en suspension homogène dans le compartiment 4 (compartiment d'entraînement) et il est entraîné dans le compartiment 5 (compartiment de réaction) en écoulement descendant de la phase aqueuse.

Selon la présente invention, la hauteur séparant l'extrémité haute de la paroi verticale 6 de la tête du réacteur 1 est suffisante afin de ménager dans la partie haute du réacteur, ainsi qu'on le voit sur le dessin, une zone de dégazage permettant également un écoulement de la suspension liquide-solide, sans perturber sa concentration en catalyseur.

Le compartiment 5, c'est-à-dire le compartiment de réaction est muni d'un système 10 d'injection et de diffusion du gaz réactif oxydant 11, sous la forme de fines bulles présentant un diamètre inférieur à 1 mm. Ce système est conçu de façon à fonctionner avec un débit gazeux tel qu'il assure le transfert du gaz réactif oxydant dans la phase liquide, avec écoulement d'abord en co-courant par entraînement des fines bulles, puis à contre courant au fur et à mesure que les bulles coalescent et grossissent, sans toutefois, qu'il se produise une inversion du sens de la circulation descendante de la suspension liquide-solide.

Cette configuration particulière à l'invention est favorable à la réaction d'oxydation catalytique pour les motifs suivants :
- d'une part, le transfert du gaz oxydant en écoulement piston dans la phase liquide-solide parfaitement mélangée est optimisé, de même que le transfert des réactifs dissous oxydants et des composés à oxyder vers la surface des particules de catalyseur et,
- d'autre part, le temps de contact des phases gaz réactif - liquide - solide est maximisé par la remontée des bulles dans le compartiment de réaction 5, après coalescence.

La phase mélangée - liquide - solide, oxydée recircule dans le compartiment d'entraînement 4 afin d'être ramenée au niveau de la sortie 3 du réacteur. Au sommet du compartiment 4, le flux liquide est divisé en deux courants dirigés respectivement l'un vers le compartiment de réaction 5, l'autre vers un moyen de séparation liquide-solide 12, de manière à séparer les particules de catalyseur entraînées par l'effluent traité et à les recycler en les ramenant dans le réacteur 1 au niveau d'une arrivée 13 qui est située au-dessus du niveau d'injection du gaz vecteur 9.

Le moyen de séparation liquide-solide 12 peut être choisi en fonction des applications de l'installation, ce moyen pouvant assurer une décantation simple ou une décantation accélérée ou même un micro-tamisage ou une séparation mettant en oeuvre des techniques membranaires. On peut ainsi utiliser un décanteur lamellaire.

L'évacuation de l'effluent traité s'effectue par une sortie 14 selon un débit équivalent à celui de l'eau brute introduite. La phase gazeuse du réacteur est évacuée par un évent 15 qui est situé à l'extrémité supérieure du réacteur 1. Le gaz ainsi évacué, qui est constitué principalement de gaz vecteur peut être recyclé en 8, en tant que gaz vecteur ou bien réutilisé dans d'autres applications. Lorsque ce gaz est recyclé, il n'est plus nécessaire de prévoir une source extérieure de gaz vecteur, dès que l'équilibre de régime est atteint. Lorsque le gaz réactif 11 est de l'ozone, le gaz extrait du réacteur par l'évent 15 est éventuellement acheminé vers un équipement de destruction ou, de préférence, vers une utilisation secondaire de l'ozone résiduel.

Les avantages apportés par l'installation objet de la présente invention sont particulièrement importants et ils permettent notamment d'accroître l'efficacité du traitement en lui apportant en outre, une grande flexibilité d'exploitation et d'adaptation à des applications très différentes les unes des autres. Parmi ces avantages on peut citer plus particulièrement les suivants
- les conditions de maintien du catalyseur en suspension et de recylage interne de la phase liquide-solide qui sont indépendantes de celles liées à la réaction catalytique (dissociation circulation/oxydation).
- l'optimisation de la réaction d'oxydation catalytique, aussi bien du point de vue de la cinétique de la réaction que des phénomènes de transfert entre les phases gaz-liquide et solide, grâce au contrôle du temps de contact et à la maîtrise des concentrations en catalyseur et en gaz réactif admissibles dans les phases en interaction ;
- la faculté d'ajuster la vitesse de recirculation du fluide liquide-solide, en faisant varier le débit de gaz vecteur, sans nécessairement modifier la quantité de gaz oxydant utilisée. Le taux de recyclage de la phase aqueuse peut varier de 5 à 2000 ;
- l'optimisation des conditions réactionnelles qui permet un épuisement de la fraction de gaz oxydant avant évacuation, ce qui limite les problèmes de sécurité et de corrosion (les essais montrent, dans le cadre de l'invention, une utilisation à 98% de l'ozone injecté, par rapport à une utilisation standard voisine de 80% avec les techniques conventionnelles),
- l'étendue de la gamme de granulométrie de catalyseurs autorisée par le système triphasique combiné ;
- la qualité de la séparation finale du liquide et des particules de catalyseur qui permet le recyclage du catalyseur ;
- l'insensibilité du procédé et de l'équipement à la concentration en matières en suspension des eaux influentes à traiter.

On a donné ci-après un exemple pratique de réalisation et de mise en oeuvre de l'invention, cet exemple n'ayant aucun caractère limiitatif.

Dans cet exemple, on a utilisé un réacteur présentant un volume utile de 10m³ pour une hauteur de liquide de 3 mètres. Le catalyseur d'oxydation en poudre, présentant une granulométrie moyenne égale à 100 microns a été introduit dans le liquide selon une concentration de 100 g/l.

Le gaz vecteur constitué d'oxygène a été injecté en bas du compartiment 4 du réacteur sous la forme de bulles selon un débit de 80 m³/m².h ce qui a permis d'induire une vitesse d'entraînement de la phase liquide de 0,3 m/s. Par ailleurs, le gaz réactif utilisé était constitué d'ozone à 10% de concentration dans l'oxygène et il a été introduit au niveau du tiers inférieur du compartiment 5, selon un débit de 10 m³/m².h par l'intermédiaire d'un diffuseur poreux en céramique permettant d'obtenir des bulles de taille moyenne, c'est-à-dire d'environ 100 microns.

L'effluent à traiter était de l'eau résiduelle industrielle présentant un débit de 25 m³/h, et contenant en moyenne journalière 300 mg/l. de Carbone Organique Total (COT) non biodégradable. Le temps de séjour moyen dans le réacteur était d'environ 20 mn.

Pendant l'établissement du débit liquide, entre 0 et 25 m³/h, le débit de gaz réactif était asservi proportionnellement au débit de liquide entrant. La concentration d'ozone du gaz réactif était ajustée entre 1 et 14% selon la mesure du COT ou de la concentration en Acides Gras Volatils, en sortie de traitement..

La récupération du catalyseur en suspension dans l'eau en sortie du réacteur a été effectuée par un décanteur lamellaire accéléré immédiatement en aval de la sortie d'eau traitée comme représenté en 12 sur la figure. Après décantation, le catalyseur a été recyclé dans le compartiment d'entraînement 4.

Le rendement d'oxydation catalytique recherché est resté stable, à 10% près, sur les larges gammes de débit-liquide et de concentration d'ozone utilisées, ce qui démontre l'efficacité et la flexibilité de l'installation selon cette invention.

L'excédent de gaz en sortie du réacteur a été évacué par l'évent 15 et recyclé dans un étage aval de traitement de l'effluent par voie biologique.

Il demeure bien entendu que la présente invention n'est pas limitée aux modes de mise en oeuvre et aux exemples de réalisation décrits et/ou mentionnés ci-dessus mais qu'elle en englobe toutes les variantes

## Revendications

1. Procédé d'épuration d'effluents aqueux, notamment d'eaux polluées, par oxydation catalytique mettant en oeuvre un réacteur triphasique comportant deux compartiments communicants, consistant à :
- maintenir en suspension le catalyseur et le faire circuler en continu entre les deux compartiments dudit réacteur, par entraînement sous l'effet d'un gaz vecteur injecté dans l'un desdits compartiments, ou compartiment d'entraînement, en réalisant un écoulement ascendant et à co-courant de la phase gazeuse et de la phase liquide dans ledit compartiment,
**caractérisé en ce que** l'oxydation des polluants en contact avec le catalyseur est effectuée dans l'autre compartiment ou compartiment de réaction, par injection d'un gaz oxydant réactif dans le compartiment de réaction (5), le gaz réactif étant introduit au niveau du tiers inférieur du compartiment de réaction (5), le catalyseur en suspension circulant dans ledit compartiment (5) en écoulement descendant de la phase aqueuse, le débit gazeux étant tel qu'il assure le transfert du gaz réactif oxydant dans la phase liquide, avec écoulement d'abord en co-courant par entraînement des fines bulles, puis à contre courant au fur et à mesure que les bulles coalescent et grossissent, sans toutefois qu'il se produise une inversion du sens de la circulation descendante de la suspension liquide-solide.

2. Procédé selon la revendication 1, **caractérisé en ce que** le gaz oxydant réactif est de l'oxygène.

3. Procédé selon la revendication 1, **caractérisé en ce que** le gaz oxydant réactif est de l'ozone mélangé à de l'air ou à de l'oxygène selon une concentration de l'ordre de 1 à 18°/a en masse.

4. Procédé selon l'une des revendications 1 à 3, **caractérisé en ce que** le catalyseur est un catalyseur d'oxydation choisi dans le groupe des composés d'oxydes métalliques des métaux de transition, ce catalyseur pouvant être déposé sur un support minéral.

5. Procédé selon la revendication 4, **caractérisé en ce que** le catalyseur présente une granulométrie comprise entre 20 microns et 1 mm, de préférence entre 100 et 300 microns.

6. Installation d'épuration d'effluents aqueux, notamment d'eaux polluées par oxydation catalytique mettant en oeuvre le procédé selon l'une quelconque des revendications précédentes, comprenant :
- un réacteur triphasique (1) muni d'une arrivée (2) de l'effluent a traiter, immergée dans le volume réactionnel et d'une sortie (3) de l'effluent traité, ledit réacteur étant séparé en un compartiment d'entraînement (4) et un compartiment de réaction (5) par une paroi verticale (6) laissant un passage à l'effluent, respectivement à ses extrémités supérieure et inférieure, les deux compartiments communiquant ainsi en parties haute et basse dudit réacteur, ce dernier étant rempli du catalyseur (7) ;
- des moyens d'injection et de diffusion (8) de bulles d'un gaz vecteur (9) positionnés dans le compartiment d'entraînement (4), au niveau de l'extrémité inférieure de ladite paroi de séparation (6), ledit gaz vecteur assurant le maintien en suspension du catalyseur et sa circulation continue entre les deux compartiments (4, 5)
**caractérisée en ce qu'**elle comporte des moyens d'injection et de diffusion (10) d'un gaz oxydant réactif (11), sous la forme de fines bulles, afin d'assurer l'oxydation des polluants en contact avec le catalyseur, ces moyens étant positionnés dans le compartiment de réaction (5) et le gaz étant introduit au niveau du tiers inférieur du compartiment de réaction (5), le débit gazeux étant tel qu'il assure le transfert du gaz réactif oxydant dans la phase liquide, avec écoulement d'abord en co-courant par entraînement des fines bulles, puis à contre courant au fur et à mesure que les bulles coalescent et grossissent, sans toutefois qu'il se produise une inversion du sens de la circulation descendante de la suspension liquide-solide.

7. Installation selon la revendication 6, **caractérisée en ce que** lesdits moyens d'injection et de diffusion (8) du gaz vecteur, l'espace entre l'extrémité inférieure de la paroi de séparation (6) et l'arrivée (2) de l'effluent à traiter sont conçus de façon à obtenir un écoulement ascendant, à co-courant, de la phase gazeuse et de la phase liquide dans le compartiment d'entraînement (4), et **en ce que** la hauteur de l'espace situé entre l'extrémité supérieure de la paroi (6) et la tête du réacteur (1) est choisie de façon à ménager, dans la partie haute du réacteur, une zone de dégazage munie d'un évent (15).

8. Installation selon la revendication 6, **caractérisée en ce qu'**elle comporte en outre un séparateur qui est disposé à la sortie de l'effluent traité dans le réacteur (1) afin de permettre un recyclage du catalyseur dans le compartiment d'entraînement (4) dudit réacteur.

9. Installation selon la revendication 6, **caractérisée en que** le gaz réactif est introduit par l'intermédiaire d'un diffuseur poreux en céramique.

## Claims

1. Process for the purification of aqueous effluents, particularly polluted water, by catalytic oxidation using a three-phase reactor having two communicating compartments, **characterized in that** it consists of:
- keeping suspended the catalyst and making it circulate continuously between the two compartments of said reactor by entrainment under the effect of a vector gas injected into one of said compartments, or entrainment compartment, by effecting a cocurrent rising flow of the gas phase and the liquid phase in said compartment, **characterized in that** the oxidation of the pollutants in contact with the catalyst is performed in the other compartment, or reaction compartment, by injecting a reactive oxidizing gas into the reaction compartment (5), the reactive gas being introduced in the lower third of the reaction compartment (5), the suspended catalyst circulating in said compartment (5) with a falling flow of the aqueous phase, the gaseous flow rate being such that it ensures the transfer of the oxidizing reactive gas into the liquid phase, with firstly a cocurrent flow by entrainment of small bubbles, then a countercurrent flow as the bubbles coalesce and enlarge, but without there being a reversal of the downward circulation direction of the liquid-solid suspension.

2. Process according to claim 1, **characterized in that** the reactive oxidizing gas is oxygen.

3. Process according to claim 1, **characterized in that** the reactive oxidizing gas is ozone mixed with air or oxygen on the basis of a concentration of approximately 1 to 16 wt.%.

4. Process according to one of the claims 1 to 3, **characterized in that** the catalyst is an oxidation catalyst chosen from within the group of metal oxide compounds of the transition metals, it being possible to deposit said catalyst on a mineral support.

5. Process according to claim 4, **characterized in that** the catalyst has a particle size distribution between 20 microns and 1 mm, preferably between 100 and 300 microns.

6. Installation for the purification of aqueous effluents, particularly polluted water, by catalytic oxidation using the process according to any one of the preceding claims, **characterized in that** it comprises:
- a three-phase reactor (1) provided with an inlet (2) for the effluent to be treated, immersed in the reaction volume, and an outlet (3) for the treated effluent, said reactor being subdivided into two compartments (an entrainment compartment (4) and a reaction compartment (5) by a vertical wall (6) leaving a passage for the effluent, respectively at its upper and lower ends, so that the two compartments communicate in the upper and lower parts of said reactor, the latter being filled with the catalyst (7),
- means (8) for injecting and diffusing bubbles of a vector gas (9) positioned in the entrainment compartment (4) level with the lower end of said separating wall (6), said vector gas maintaining the catalyst in suspension and continuously circulating said catalyst between the two compartments (4, 5), **characterized in that** it has means (10) for injecting and diffusing a reactive oxidizing gas (11) in the form of small bubbles, in order to ensure the oxidation of the pollutants in contact with the catalyst, said means being positioned in the reaction chamber (5) and the gas being introduced in the lower third of the reaction compartment (5), the gaseous flow rate being such that it ensures the transfer of the oxidizing reactive gas into the liquid phase, with firstly a cocurrent flow by entrainment of the small bubbles, then a countercurrent flow as the bubbles coalesce and enlarge, but without there being a reversal of the downward circulation direction of the liquid-solid suspension.

7. Installation according to claim 6, **characterized in that** with respect to said vector gas injecting and diffusing means (8), the space between the lower end of the separating wall (6) and the inlet (2) for the effluent to be treated are designed so as to obtain a rising, cocurrent flow of the gas phase and the liquid phase in the entrainment compartment (4) and **in that** the height of the space between the upper end of the wall (6) and the head of the reactor (1) is chosen so as to provide, in the upper part of the reactor, a degassing zone equipped with a vent (15).

8. Installation according to claim 6, **characterized in that** it also has a separator located at the treated effluent outlet in the reactor (1) in order to permit a recycling of the catalyst in the entrainment compartment (4) of said reactor.

9. Installation according to claim 6, **characterized in that** the reactive gas is introduced by means of a porous ceramic diffuser.

## Patentansprüche

1. Verfahren zum Klären von wässrigen Ausflüssen, insbesondere von schadstoffbelastetem Wasser, durch katalytische Oxidation unter Verwendung eines dreiphasigen Reaktors, der zwei miteinander kommunizierende Abteile umfasst, das darin besteht:
- den Katalysator in Suspension zu halten und ihn durch Antriebswirkung eines in eines der besagten Abteile (oder Antriebsabteil) eingeblasenen Treibgases kontinuierlich zwischen den beiden Abteilen des besagten Reaktors zirkulieren zu lassen, indem in dem besagten Abteil eine aufsteigende und gleichsinnige Strömung der Gasphase und der flüssigen Phase erzeugt wird, **dadurch gekennzeichnet, dass** die Oxidation der Schadstoffe in Kontakt mit dem Katalysator in dem anderen Abteil (oder Reaktionsabteil) durch Einblasen eines oxidierenden reaktiven Gases in das Reaktionsabteil (5) bewirkt wird, wobei das reaktive Gas in Höhe des unteren Drittels des Reaktionsabteils (5) eingeführt wird, wobei der in Suspension befindliche Katalysator in dem besagten Abteil (5) in absteigender Strömung der wässrigen Phase zirkuliert, wobei der gasförmige Massenstrom so groß ist, dass er die Übertragung des reaktiven oxidierenden Gases in die flüssige Phase sicherstellt, zunächst in gleichsinniger Strömung durch Treibwirkung der feinen Blasen, dann im Gegenstrom in dem Maße, wie die Blasen koaleszieren und sich vergrößern, jedoch ohne dass sich eine Umkehrung des Bewegungssinnes der absteigenden Zirkulation der Fest-Flüssig-Suspension ergibt.

2. Verfahren nach Anspruch 1, **dadurch gekennzeichnet, dass** das oxidierende reaktive Gas Sauerstoff ist.

3. Verfahren nach Anspruch 1, **dadurch gekennzeichnet, dass** das oxidierende reaktive Gas Ozon ist, das in einer Konzentration der Größenordnung 1 bis 16 Massenprozenten mit Luft oder Sauerstoff gemischt ist.

4. Verfahren nach einem der Ansprüche 1 bis 3, **dadurch gekennzeichnet, dass** der Katalysator ein aus der Gruppe der Metalloxidverbindungen der Übergangsmetalle ausgewählter Oxidationskatalysator ist, wobei dieser Katalysator auf einem mineralischen Träger abgeschieden sein kann.

5. Verfahren nach Anspruch 4, **dadurch gekennzeichnet, dass** der Katalysator eine Korngrößenverteilung zwischen 20 µm und 1mm aufweist, vorzugsweise zwischen 100 und 300 µm.

6. Anlage zum Klären von wässrigen Ausflüssen, insbesondere von schadstoffbelastetem Wasser durch katalytische Oxidation unter Anwendung des Verfahrens nach einem der vorstehenden Ansprüche, welche umfasst:
- einen dreiphasigen Reaktor (1) mit einem in das Reaktionsvolumen eingetauchten Einlass (2) für das zu behandelnde Abwasser und mit einem Auslass (3) für das behandelte Abwasser, wobei dieser Reaktor in zwei Abteile (ein Antriebsabteil (4) und ein Reaktionsabteil (5)) durch eine vertikale Wand (6) unterteilt ist, die jeweils an ihrem oberen und unteren Ende einen Durchlass für das Abwasser hat, wodurch die beiden Abteile in den oberen und unteren Abschnitten des besagten Reaktors miteinander kommunizieren, welch letzterer mit dem Katalysator (7) angefüllt ist;
- Mittel (8) zum Einblasen und Verteilen von Blasen eines Treibgases (9), die in dem Antriebsabteil (4) in Höhe des unteren Endes der besagten Trennwand (6) angeordnet sind, wobei das besagte Treibgas die Aufrechterhaltung des Schwebezustands des Katalysators und seine kontinuierliche Zirkulation zwischen den beiden Abteilen (4, 5) sicherstellt, **dadurch gekennzeichnet, dass** sie Mittel (10) zum Einspritzen und Verteilen eines oxidierenden reaktiven Gases (11) in Form feiner Blasen aufweist, um die Oxidation der Schadstoffe in Kontakt mit dem Katalysator sicherzustellen, wobei diese Mittel in dem Reaktionsabteil (5) angeordnet sind, das Gas in Höhe des unteren Drittels des Reaktionsabteils (5) eingeführt wird und der Gasmassenstrom so bemessen ist, dass er die Übertragung des reaktiven oxidierenden Gases in die flüssige Phase sicherstellt, zunächst in gleichsinniger Strömung durch Treibwirkung der feinen Blasen, dann im Gegenstrom in dem Maße, wie die Blasen koaleszieren und sich vergrößern, jedoch ohne dass sich eine Umkehrung des Bewegungssinnes der absteigenden Zirkulation der Fest-Flüssig-Suspension ergibt.

7. Anlage nach Anspruch 6, **dadurch gekennzeichnet, dass** die besagten Mittel (8) zum Einblasen und Verteilen des Treibgases und der Raum zwischen dem unteren Ende der Trennwand (6) und dem Einlass (2) für das zu behandelnde Abwasser so gestaltet sind, dass eine aufsteigende gleichsinnige Strömung der Gasphase und der flüssigen Phase in dem Antriebsabteil (4) erhalten wird, und **dadurch**, dass die Höhe des Raumes zwischen dem oberen Ende der Wand (6) und dem Kopf des Reaktors (1) so bemessen ist, dass im Oberteil des Reaktors ein mit einem Gasauslass (15) versehener Entgasungsbereich angeordnet werden kann.

8. Anlage nach Anspruch 6, **dadurch gekennzeichnet, dass** sie außerdem einen Abscheider umfasst, der am Auslass des im Reaktor (1) behandelten Abwassers angeordnet ist, um eine Rückführung des Katalysators in das Antriebsabteil (4) des besagten Reaktors zu ermöglichen.

9. Anlage nach Anspruch 6, **dadurch gekennzeichnet, dass** das reaktive Gas mithilfe eines keramischen porösen Zerstäubers eingeführt wird.
